# EUROPÄISCHE PATENTSCHRIFT

(11) **EP 1 552 983 B1**
(45) Veröffentlichungstag und Bekanntmachung des Hinweises auf die Patenterteilung: **14.03.2007**
(21) Anmeldenummer: 04000119.0
(22) Anmeldetag: 07.01.2004
(51) Int. Cl.: B60Q 1/26, B64D 47/06

(54) **Leuchte, insbesondere Warnleuchte, für ein Fahrzeug**
Light, especially warning light, for vehicle
Lampe, notamment avertisseur lumineux, pour véhicule

(43) Veröffentlichungstag der Anmeldung: 13.07.2005
(73) Patentinhaber: Goodrich Lighting Systems GmbH, 59557 Lippstadt (DE)
(72) Erfinder: Scheithauer, Ulrich, 59597 Erwitte (DE)
(74) Vertreter: Hilleringmann, Jochen

(56) Entgegenhaltungen:
- EP-A- 1 334 870
- WO-A-01/14789
- WO-A-02/49917
- US-B1- 6 367 949
- US-B1- 6 582 100

## Beschreibung

Die Erfindung betrifft eine Leuchte für ein Fahrzeug und insbesondere eine Warnleuchte, wie sie beispielsweise außen an Flugzeugen als Anti-Collision-Leuchte anbringbar ist.

Wegen ihrer Wartungsfreundlichkeit und langen Lebensdauer erfreuen sich Leuchtdioden einer zunehmenden Akzeptanz im Fahrzeugbau und dort insbesondere im Flugzeugbau. Ihre Verwendung in Blitzlampen, beispielsweise als Anti-Collision-Leuchten bei Flugzeugen, macht eine effektive Abführung thermischer Verlustleistung erforderlich. Zu diesem Zweck ist es von Vorteil, wenn die Leuchtdioden auf einem Kühlkörper angeordnet sind, mit dem sie thermisch eng gekoppelt sind. Der thermischen Kopplung der Leuchtdioden mit einem Kühlkörper über beispielsweise Wärmeleit-Pasten bzw. -Kleber sind jedoch bezüglich der ausreichenden mechanischen Fixierung auf dem Kühlkörper Grenzen gesetzt, die wiederum den Einsatz der Leuchtdioden einschränken.

Aus US 6,582,100 B1 ist eine gattungsgemäße Leuchte bekannt, bei dem eine Leuchtdiode über ein Andrückelement federelastisch gegen die Platine, auf der die Leuchtdiode angeordnet ist, gedrückt gehalten wird.

In WO 02/49917 A1 ist eine Strobeleuchte mit Leuchtdioden, die zum Bilden eines Leuchtdioden-Lichtrings um den Umfang einer elektrisch isolierenden und elektrisch leitenden Scheibe angeordnet sind, beschrieben.

Aus EP 1 334 870 A2 ist eine optische Blitz-Anzeigevorrichtung mit mehreren auf einem gemeinsamen Träger angeordneten Lichtquellen bekannt.

In US 6,376,949 B1 ist eine Leuchtdioden-Mehrzwecklampe ebenfalls mit mehreren auf einem gemeinsamen Träger angeordneten Leuchtdiodenvorrichtungen beschrieben.

In WO 01/14789 A1 ist eine Hindernisbefeuerungs-Lampe mit mehreren in Reihe geschalteten und auf einem gemeinsamen Träger angeordneten Leuchtdioden beschrieben.

Eine Aufgabe der Erfindung ist es, eine Leuchte mit mindestens einer Leuchtdiode zu schaffen, deren thermische Kopplung mit einem Kühlkörper verbessert ist und gleichzeitig deren mechanisch ausreichende Fixierung sicherstellt.

Zur Lösung dieser Aufgabe wird mit der Erfindung eine Leuchte, insbesondere Warnleuchte, für ein Fahrzeug, wie beispielsweise ein Flugzeug, vorgeschlagen, wobei die Leuchte versehen ist mit den Merkmalen des Anspruchs 1. Die Merkmale von Ausgestaltungen der Erfindung sind Gegenstand der Unteransprüche.

Nach der Erfindung wird die mindestens eine Leuchtdiode mittels eines Andrückelements mechanisch gegen den Kühlkörper gedrückt, und zwar in einer durch die Wirkung der Andrückkraft bestimmten Andrückrichtung. Der Vorteil dieses mechanischen Andrückens der Leuchtdiode gegen den Kühlkörper besteht darin, dass trotz der Andrückwirkung weiterhin eine beispielsweise durch unterschiedliche thermische Ausdehnung bedingte Relativbewegung von Kühlkörper und Leuchtdiode quer zur Andrückrichtung gegeben ist. Gerade diesbezüglich ist die erfindungsgemäß vorgeschlagene Lösung gegenüber beispielsweise einer Verklebung des Gehäuses der Leuchtdiode mit dem Kühlkörper mit Hilfe eines thermisch leitenden Klebers vorteilhaft.

Das Andrückelement ist vorzugsweise elastisch ausgebildet, was durch eine entsprechende Materialwahl und/oder eine entsprechende konstruktive Ausgestaltung realisiert ist. Das Andrückelement liegt am Gehäuse der Leuchtdiode an. Das Gehäuse weist neben Anschlusselementen für die elektrische Kontaktierung auch einen Lichtaustrittsbereich auf, aus dem die von der Leuchtdiode erzeugte Strahlung austritt. Das Andrückelement greift nun außerhalb des Lichtaustrittsbereichs an dem Gehäuse an, um die Lichtausbeute der Leuchtdiode nicht negativ zu beeinflussen. Je nach Ausgestaltung und mechanischer Kontaktierung des Andrückelements kann dieses in Bereichen, in denen auf das Andrückelement von der Leuchtdiode erzeugte Strahlung auftrifft, reflektierend ausgebildet sein. Die Abfuhr von Verlustwärme von der Leuchtdiode wird noch weiter verbessert, wenn das Andrückelement aus einem wärmeleitenden und/oder wärmeabstrahlenden Material wie beispielsweise Metall (gegebenenfalls schwarz beschichtet) besteht.

Bei Leuchten, bei denen das Licht innerhalb eines bestimmten Azimut-Winkelbereich abgestrahlt wird, wie dies beispielsweise bei Anti-Collision-Leuchten der Fall ist, welche unter anderem über 360° bezogen auf eine horizontale Ebene Licht abstrahlen, ist der Kühlkörper vorzugsweise als rotationssymmetrischer Körper ausgebildet an dessen Umfangsfläche mehrere Leuchtdioden angeordnet sind. Die Lichtaustrittsbereiche der Gehäuse dieser Leuchtdioden sind der Umfangsfläche des Kühlkörpers abgewandt und befinden sich somit auf derjenigen Seite des Gehäuses, gegen die die Andrückkraft des bzw. der Andrückelemente wirkt. Bei einem derartigen Aufbau einer Leuchte ist es vorteilhaft, wenn das Andrückelement für sämtliche Leuchtdioden als Spannelement ausgebildet ist, das an der dem Kühlkörper abgewandten Außenfläche des Gehäuses der mindestens einen Leuchtdiode anliegt, und zwar außerhalb von dem an dieser Außenfläche angeordneten Lichtaustrittsbereich des Gehäuses. So ist es beispielsweise möglich, ein gemeinsames Spannelement in Form eines als Feder ausgebildeten Drahtes, eines Flachbandes o.dgl. schmalem Element auszubilden, das sich seitlich der Lichtaustrittsbereiche sämtlicher Gehäuse der Leuchtdioden über deren betreffende Außenflächen erstreckt und an diesen anliegt. Beidseitig der Lichtaustrittsbereiche der Gehäuse sind dann zweckmäßigerweise zwei derartige Spannelemente vorgesehen. Konstruktiv einfacher und insbesondere montagefreundlicher ist es dagegen, dass das Spannelement nach der Erfindung als Spannband ausgebildet ist, das sich nahezu über die gesamte Breite der die Lichtaustrittsbereiche aufweisenden Außenflächen der Gehäuse der Leuchtdioden erstreckt und vorzugsweise mit den Lichtaustrittsbereichen der Gehäuse fluchtende Aussparungen aufweist.

Die erfindungsgemäße Ausbildung des Andrückelements in Form eines Spannelements hat den Vorteil, dass die Lichtausbreitungsrichtung der Leuchtdioden durch das Andrückelement nicht beeinträchtigt ist. Die einander gegenüberliegenden Enden des Spannelements können beispielsweise am Kühlkörper befestigt sein, so dass das Spannelement außerhalb seiner beiden Enden zwischen sich und dem Kühlkörper die einzelnen Leuchtdioden einschließt. Noch zweckmäßiger allerdings ist es, wenn die beiden Enden des Spannelements bzw. Spannbandes direkt oder indirekt und vorzugsweise lösbar verbindbar untereinander verbunden sind und das Spannelement auf diese Weise über seine gesamte Länge, also auch im Bereich seiner beiden verbundenen Enden, zwischen sich und dem Kühlkörper die Leuchtdioden einschließt. Auf diese Weise ist ein Kühlkörper realisierbar, der über 360° Licht abstrahlende Leuchtdioden trägt und gegen den die Gehäuse der Leuchtdioden gedrückt gehalten sind. Der Kühlkörper selbst braucht ferner keinerlei Befestigungsmittel für das Spannelement aufzuweisen, was seine Konstruktion neben dem zuvor beschriebenen Vorteil vereinfacht.

Zur weiteren Erhöhung der Wärmeabfuhreffizienz ist es von Vorteil, wenn zwischen dem Kühlkörper und dem Gehäuse eine Wärmeleitmaterialschicht angeordnet ist, die Scherkräfte zwischen dem Kühlkörper und dem Gehäuse der Leuchtdiode ermöglicht. Insoweit ist die Wärmeleitmaterialschicht also verformbar, wie dies beispielsweise bei Wärmeleitpasten, elastischen oder plastischen thermisch leitenden Klebern oder anderen weichen thermisch leitenden Materialien der Fall ist. Vorzugsweise werden dauerelastische thermische Leitpasten in dünnsten Schichten verwendet.

Die elektrische Kontaktierung der mindestens einen Leuchtdiode erfolgt vorzugsweise über eine durchgehend sich unterhalb der LED erstreckenden Leiterplatine, die zwischen der Leuchtdiode und dem Kühlkörper angeordnet ist. Zweckmäßigerweise handelt es sich hierbei um eine zumindest abschnittsweise flexible Leiterplatine. Indem das Andrückelement gegen das Gehäuse der Leuchtdiode drückt, drückt es indirekt die flexible Leiterplatine gegen den Kühlkörper, so dass ein guter thermischer Kontakt zwischen Gehäuse und Kühlkörper weiterhin gegeben ist. Die Leiterplatine kann als Starr-Flex-Platine ausgebildet sein, wobei die Leuchtdiode in einem flexiblen und damit dünnen Bereich der Leiterplatine angeordnet ist. Vorzugsweise ist die Leiterplatine insgesamt flexibel ausgebildet, weist also keinerlei starre Bereiche auf. Derartige Leiterplatinen eignen sich dann, um nach Art eines Bandes um einen Kühlkörper gelegt zu werden, der als Träger und als thermische Abführmasse für die Leuchtdiode bzw. Leuchtdioden fungiert.

Trotz Verwendung einer (zumindest abschnittsweise flexiblen) Leiterplatine zur elektrischen Kontaktierung der Leuchtdiode braucht sich die Platine jedoch nicht notwendigerweise zwischen dem Gehäuse der Leuchtdiode und dem Kühlkörper zu erstrecken. So kann die Platine im Bereich des Gehäuses eine Aussparung aufweisen, womit das Gehäuse direkten Kontakt zum Kühlkörper hat. Entweder weist dieser um die Dicke der Platine erhabene Anlageflächen auf oder aber die Unterseite des Gehäuses der Leuchtdiode fluchtet mit der Unterseite der Platine. Zwischen dem Gehäuse der Leuchtdiode und dem Kühlkörper kann eine Wärmeleitmaterialschicht angeordnet sein.

Damit der Wärmetransport zwischen dem Gehäuse der Leuchtdiode und dem Kühlkörper möglichst effektiv erfolgt, ist eine Flächenanpressung, d.h. ein flächiger Kontakt von Vorteil. Die einander gegenüberliegenden Flächen von Kühlkörper und Leuchtdiodengehäuse sollten also einander entsprechen. Da es herstellungstechnisch von Vorteil ist, Gehäuse für Leuchtdioden mit planen Auflageflächen zu fertigen, ist es zweckmäßig, wenn der Kühlkörper an seiner Umfangsfläche abschnittsweise plane Anlageflächenbereiche (Facetten) aufweist. Innerhalb dieser planen Anlageflächenbereiche sind jeweils ein oder mehrere Leuchtdiodengehäuse angeordnet.

Die Erfindung wird nachfolgend unter Bezugnahme auf die Zeichnung näher erläutert. Im einzelnen zeigen:
- Fig. 1: in Seitenansicht eine Anti-Collision-Leuchte mit mehreren übereinander angeordneten und sich über 360° erstreckenden Reihen von nebeneinander angeordneten Leuchtdioden,
- Fig. 2: einen Schnitt entlang der Linie II-II der Fig. 1 und
- Fig. 3: eine Draufsicht auf den Kühlkörper mit diesen umgebenden Leuchtdioden in Richtung des Pfeils III der Fig. 1.

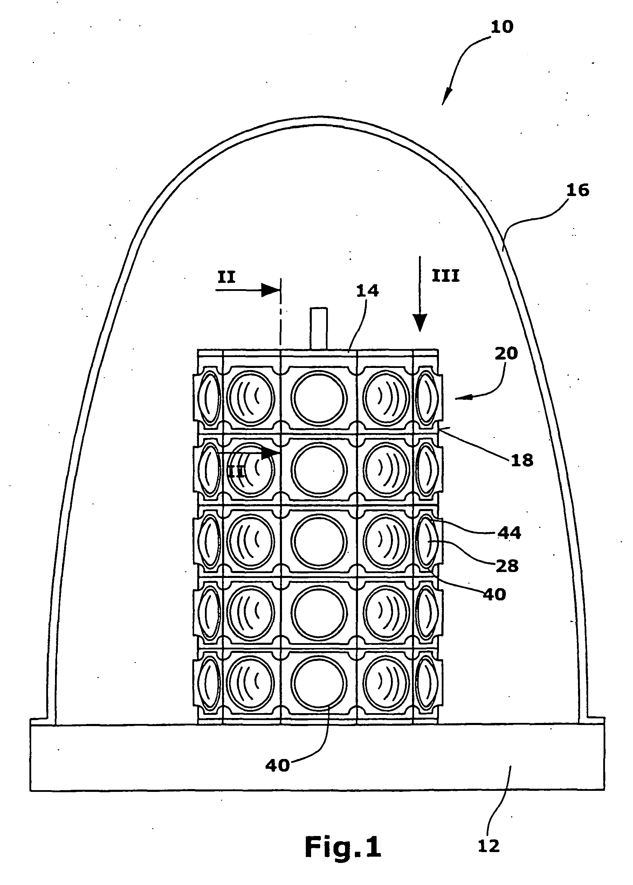

Fig. 1 zeigt in Seitenansicht eine in diesem Ausführungsbeispiel als Warnlicht oder Anti-Collision-Leuchte ausgebildete Leuchte 10, die einen Grundkörper 12 mit einem darauf angeordneten im wesentlichen rotationssymmetrischen Kühlkörper 14 und einer domartigen lichtdurchlässigen Lichtabdeckung 16. Auf der Außenseite 18 des Kühlkörpers 14 befinden sich eine Vielzahl von Leuchtdioden 20, die in diesem Ausführungsbeispiel in horizontalen Reihen nebeneinander angeordnet sind, wobei mehrere derartige Leuchtdiodenreihen übereinander angeordnet sind.

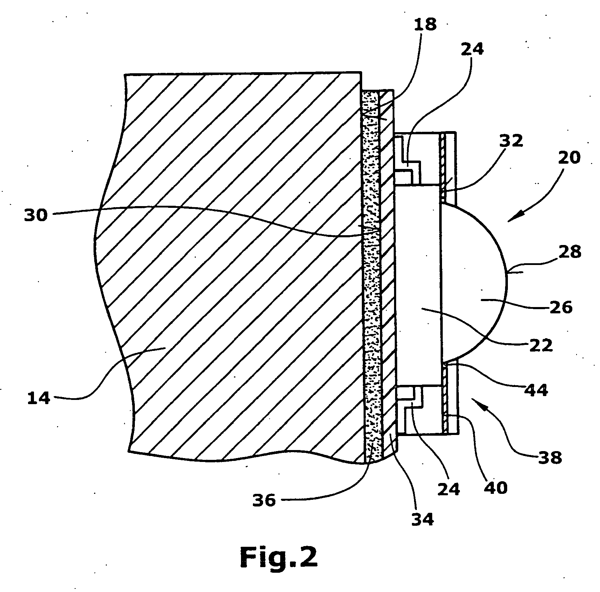

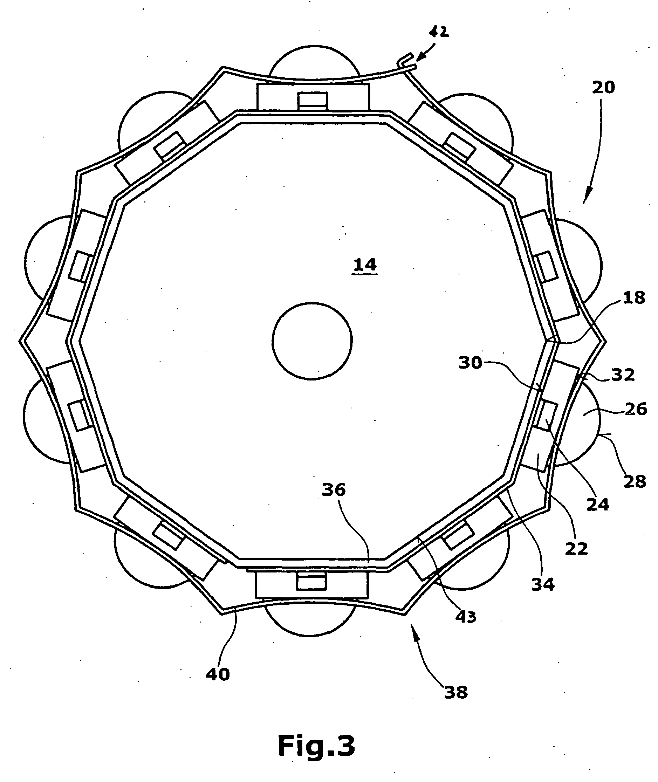

Wie am besten anhand der Fign. 2 und 3 zu erkennen ist, weist jede Leuchtdiode ein Gehäuse 22 auf, aus dem zwei Anschlusselemente 24 herausragen. Das Gehäuse 22 ist ferner mit einem sphärischen optischen Element 26 versehen, dessen Außenseite den Lichtaustrittsbereich 28 des Gehäuses 22 definiert. Das Gehäuse 22 weist eine der Außenseite 18 des Kühlkörpers 14 zugewandte Unterseite 30 auf sowie eine dieser gegenüber liegende Außenseite 32.

Die elektrischen Anschlusselemente 24 sind mit (nicht dargestellten) elektrischen Leiterbahnen einer flexiblen Leiterplatine 34 verbunden, die außen um den Kühlkörper 14 herum gelegt ist. Diese flexible Leiterplatine 34 ist über eine Wärmeleitmaterialschicht 36 beispielsweise in Form einer Wärmeleitpaste oder eines elastischen bzw. plastischen wärmeleitenden Klebers mit dem Kühlkörper 14 thermisch gekoppelt.

Über diese thermische Kopplung wird Verlustwärme, die von den Leuchtdioden 20 während ihres Betriebes erzeugt wird, an den Kühlkörper 14 abgeführt. Wie sich herausgestellt hat, ist der einfache (Berührungs-)Kontakt zwischen den Gehäusen 22 der Leuchtdioden 20 und dem Kühlkörper 14 gegebenenfalls unter Zwischenschaltung der Wärmeleitmaterialschicht 36 gerade bei den heutzutage erhältlichen Hochleistungsdioden mit einer Leistungsabgabe von einigen wenigen Watt nicht ausreichend.

Daher werden die Leuchtdioden 20 bei der hier beschriebenen und in der Zeichnung gezeigten Leuchte 10 mittels federelastischer Andrückelemente 38 mechanisch gegen den Kühlkörper 14 gedrückt. In diesem Ausführungsbeispiel sind die Andrückelemente als Spannbänder 40 ausgebildet, die an den Außenseiten 32 der Leuchtdiodengehäuse 22 anliegen und umlaufend ausgebildet sind. Die Spannbänder 40 weisen z.B. Federstahl auf und bestehen aus einzelnen konkav von dem Kühlkörper 14 weg gebogenen Abschnitten 41, deren Anzahl gleich der Anzahl von Leuchtdiodengehäuse 22 pro Reihe ist. Die Enden 42 jedes Spannbandes 40 sind direkt oder indirekt miteinander verbunden. Jedes Spannband 40 umgibt eine horizontale Reihe von Leuchtdioden 20 von außen und drückt die Leuchtdiodengehäuse 22 gegen plane Anlageflächenbereiche 43 der Außenseite 18 des Kühlkörpers 14. Jedes Spannband 40 weist in seinen Abschnitten 41 jeweils eine Aussparung 44 auf, die mit den Lichtaustrittsbereichen 28 der Leuchtdiodengehäuse 22 fluchten. Die Spannbänder 40 sind elastisch, was, wie oben beschrieben und in der Zeichnung dargestellt, durch eine entsprechende konstruktive Ausgestaltung der Bänder oder durch deren Material realisiert werden kann. Die konstruktive Ausgestaltung kann sich dabei auch auf den (nicht dargestellten) Verschluss der Spannbänder 40 beziehen. Die Spannbänder 40 dienen sowohl direkt als auch indirekt der Wärmeabfuhr. Die indirekte Wärmeabfuhrwirkung der Spannbänder 40 ist darin begründet, dass die Spannbänder 40 die Gehäuse 22 gegen den Kühlkörper 14 drücken und somit den thermischen Kontakt der Gehäuse 22 zum Kühlkörper 14 verbessern. Andererseits erstreckt sich die direkte Kühlwirkung der Spannbänder 40 darauf, dass diese unmittelbar an den Gehäusen 22 der Leuchtdioden 20 anliegen und somit Wärme von den Gehäusen 22 in die Umgebung abführen.

## Patentansprüche

1. Leuchte, insbesondere Warnleuchte, für ein Fahrzeug, wie beispielsweise ein Flugzeug, mit
- mindestens einer Leuchtdiode (20), die ein Gehäuse (22) mit an diesen angeordneten Anschlusselementen (24) aufweist, und
- einem Kühlkörper (14), mit dem das Gehäuse (22) der mindestens einen Leuchtdiode (20) in wärmeleitendem Kontakt steht,
- wobei die mindestens eine Leuchtdiode (20) mittels eines Andrückelements (38) gegen den Kühlkörper (14) gedrückt ist, und zwar unter Aufrechterhaltung einer durch unterschiedliche thermische Ausdehnung bedingten Relativbewegung quer zur Andrückrichtung,
**dadurch gekennzeichnet,**
- **dass** das Andrückelement (38) als Spannelement (40) ausgebildet ist, welches an der dem Kühlkörper (14) abgewandten Außenseite (32) des Gehäuses (22) der mindestens einen Leuchtdiode (20) anliegt,
- **dass** das Spannelement (40) eine mit einem Lichtaustrittsbereich (28) des Gehäuses (22) der mindestens einen Leuchtdiode (20) fluchtende Aussparung (44) aufweist, und
- **dass** das Spannelement (40) als sich um den Kühlkörper (14) herum erstreckendes Spannband ausgebildet ist.

2. Leuchte nach Anspruch 1, **dadurch gekennzeichnet, dass** zwischen dem Kühlkörper (14) und dem Gehäuse (22) der mindestens einen Leuchtdiode (20) eine verformbare Wärmeleitmaterialschicht (36) angeordnet ist.

3. Leuchte nach Anspruch 1 oder 2, **dadurch gekennzeichnet, dass** die mindestens eine Leuchtdiode (20) elektrisch an einer zumindest abschnittsweise flexiblen Leiterplatine (34) kontaktiert ist und dass das Spannelement (38) das Gehäuse (22) der mindestens einen Leuchtdiode (20) gegen die Leiterplatine (34) und damit diese gegen den Kühlkörper (14) drückt.

4. Leuchte nach Anspruch 3, **dadurch gekennzeichnet, dass** das Spannelement (40) zumindest in denjenigen Bereichen, innerhalb derer aus dem Gehäuse (22) der mindestens einen Leuchtdiode (20) austretendes Licht auf das Andrückelement (38) auftrifft, reflektierend ausgebildet ist.

5. Leuchte nach einem der Ansprüche 1 bis 4, **dadurch gekennzeichnet, dass** sich das Spannelement (38) gegen den Kühlkörper (14) abstützt.

6. Leuchte nach einem der Ansprüche 1 bis 5, **dadurch gekennzeichnet, dass** der Kühlkörper (14) eine Außenfläche (18) aufweist, die zumindest einen planaren Anlageflächenbereich (43) aufweist, gegen dass das Gehäuse (22) der mindestens einen Leuchtdiode (20) durch das Spannelement (38) gedrückt gehalten ist.

7. Leuchte nach einem der Ansprüche 1 bis 6, **dadurch gekennzeichnet, dass** mehrere Leuchtdioden (20) vorgesehen sind.

8. Leuchte nach Anspruch 6 und 7, **dadurch gekennzeichnet, dass** mindestens zwei Leuchtdioden (20) gegen einen gemeinsamen planaren Anlageflächenbereich (43) des Kühlkörpers (14) gedrückt gehalten sind.

9. Leuchte nach Anspruch 6 und 7, **dadurch gekennzeichnet, dass** der Kühlkörper (14) mehrere in dessen Umfangsrichtung aufeinander folgend angeordnete planare Anlageflächenbereiche (43) aufweist und dass gegen jeden Anlageflächenbereich (43) jeweils das Gehäuse (22) mindestens einer Leuchtdiode (20) gedrückt gehalten ist.

10. Leuchte nach einem der Ansprüche 1 bis 9, **dadurch gekennzeichnet, dass** das Spannelement (40) einander gegenüberliegende Enden aufweist, die miteinander vorzugsweise lösbar verbindbar sind.

11. Leuchte nach einem der Ansprüche 1 bis 10, **dadurch gekennzeichnet, dass** das Andrückelement (38) ein wärmeleitendes Material aufweist.

## Claims

1. Light, particularly warning light, for a vehicle, such as, for example, an airplane, comprising
- at least one light-emitting diode (20) comprising a housing (22) with connecting elements (24) arranged thereon, and
- a heat sink (14) with which the housing (22) of the at least one light-emitting diode (20) is in heat-conducting contact,
- the at least one light-emitting diode (20) being pressed against the heat sink (14) by means of a pressing element (38) while a relative movement transverse to the pressing direction caused by different thermal expansion is maintained,
**characterized in**
- **that** the pressing element (38) is configured as a tensioning element (40) abutting on the outside of the housing (22) of the at least one light-emitting diode (20), which faces away from the heat sink (14),
- **that** the tensioning element (40) comprises a recess (44) being in alignment with a light exit area (28) of the housing (22) of the at least one light-emitting diode (20), and
- **that** the tensioning element (40) is configured as a tensioning strap extending about the heat sink (14).

2. Light according to claim 1, **characterized in that** a deformable heat-conducting material layer (36) is arranged between the heat sink (14) and the housing (22) of the at least one light-emitting diode (20).

3. Light according to claim 1 or 2, **characterized in that** the at least one light-emitting diode (20) is electrically contacted at an at least sectionally flexible printed circuit board (34) and that the pressing element (38) presses the housing (22) of the at least one light-emitting diode (20) against the printed circuit board (34) and thus the latter against the heat sink (14).

4. Light according to claim 3, **characterized in that** the pressing element (40) is reflective at least in those areas within which light emerging from the housing (22) of the at least one light-emitting diode (20) impinges onto the pressing element (38).

5. Light according to one of claims 1 to 4, **characterized in that** the pressing element (38) is supported against the heat sink (14).

6. Light according to one of claims 1 to 5, **characterized in that** the heat sink (14) comprises an outer surface (18) with at least one plane abutment surface area (43) against which the housing (22) of the at least one light-emitting diode (20) is held pressingly by the pressing element (38).

7. Light according to one of claims 1 to 6, **characterized in that** several light-emitting diodes (20) are provided.

8. Light according to claim 6 and 7, **characterized in that** at least two light-emitting diodes (20) are held pressingly against a common plane abutment surface area (43) of the heat sink (14).

9. Light according to claim 6 and 7, **characterized in that** the heat sink (14) has several plane abutment surface areas (43) arranged successively in the circumferential direction thereof, and that the housing (22) of at least one light-emitting diode (20) is held pressingly against each abutment surface area (43), respectively.

10. Light according to one of claims 1 to 9, **characterized in that** the tensioning element (40) comprises ends opposite to each other which are preferably adapted to be releasably connected to each other.

11. Light according to one of claims 1 to 10, **characterized in that** the pressing element (38) comprises a heat-conducting material.

## Revendications

1. Lampe, notamment avertisseur lumineux, pour un véhicule, tel que par exemple un avion, avec
au moins une diode électroluminescente (20) qui présente un boîtier (22) avec des éléments de raccordement (24) disposés sur celui-ci, et
un dissipateur de chaleur (14), avec lequel le boîtier (22) de la au moins une diode électroluminescente (20) est en contact thermoconducteur,
dans laquelle la au moins une diode électroluminescente (20) est appliquée au moyen d'un élément de pression (38) contre le dissipateur de chaleur (14), et ceci en maintenant un mouvement relatif, conditionné par la dilatation thermique variable, transversal au sens de pression,
**caractérisée en ce que**,
l'élément de pression (38) est configuré comme un élément de serrage (40), qui est disposé sur la face externe (32), opposée au dissipateur de chaleur (14), du boîtier (22) de la au moins une diode électroluminescente (20),
l'élément de serrage (40) comprend un évidement (44) aligné sur une zone de sortie de la lumière (28) du boîtier (22) de la au moins une diode électroluminescente (20), et
l'élément de serrage (40) est configuré comme une bande de serrage s'étendant autour du dissipateur de chaleur (14).

2. Lampe selon la revendication 1, **caractérisée en ce que** entre le dissipateur de chaleur (14) et le boîtier (22) de la au moins une diode électroluminescente (20) est disposée une couche malléable de matériau thermoconducteur (36).

3. Lampe selon la revendication 1 ou 2, **caractérisée en ce que** la au moins une diode électroluminescente (20) est en contact électrique avec un cadre de montage (34), flexible au moins par secteurs, et en de que l'élément de serrage (38) pousse le boîtier (22) de la au moins une diode électroluminescente (20) contre le cadre de montage (34), et donc celui-ci contre le dissipateur de chaleur (14).

4. Lampe selon la revendication 3, **caractérisée en ce que** l'élément de serrage (40) est réalisé en étant réfléchissant au moins dans les zones à l'intérieur desquelles la lumière sortant du boîtier (22) de la au moins une diode électroluminescente (20) est incidente sur l'élément de pression (38).

5. Lampe selon une des revendications 1 à 4, **caractérisée en ce que** l'élément de serrage (38) s'appuie contre le dissipateur de chaleur (14).

6. Lampe selon une des revendications 1 à 5, **caractérisée en ce que** le dissipateur de chaleur (14) présente une surface externe (18) qui comprend au moins une zone de surface d'appui plane (43), contre laquelle le boîtier (22) de la au moins une diode électroluminescente (20) est maintenu pressé par l'élément de serrage (38).

7. Lampe selon une des revendications 1 à 6, **caractérisée en ce que** plusieurs diodes électroluminescentes (20) sont prévues.

8. Lampe selon la revendication 6 et 7, **caractérisée en ce que** au moins deux diodes électroluminescentes (20) sont maintenues pressées contre une zone de surface d'appui plane (43) commune du dissipateur de chaleur (14).

9. Lampe selon la revendication 6 et 7, **caractérisée en ce que** le dissipateur de chaleur (14) comprend plusieurs zones de surfaces d'appuis planes (43) se succédant dans le sens périphérique du dissipateur de chaleur, et **en ce que** le boîtier (22) d'au moins une diode électroluminescente (20) est maintenu pressé contre chaque zone de surface d'appui plane (43).

10. Lampe selon une des revendications 1 à 9, **caractérisée en ce que** l'élément de serrage (40) comprend des extrémités opposées les unes aux autres qui peuvent être reliées entre elles de préférence de façon amovible.

11. Lampe selon une des revendications 1 à 10, **caractérisée en ce que** l'élément de pression (38) comprend un matériau thermoconducteur.
